# EUROPÄISCHE PATENTSCHRIFT

(11) **EP 1 138 541 B1**
(45) Veröffentlichungstag und Bekanntmachung des Hinweises auf die Patenterteilung: **03.11.2004**
(21) Anmeldenummer: 01890108.2
(22) Anmeldetag: 30.03.2001
(51) Int. Cl.: B60K 15/04

(54) **Einfüllstutzen**
Filler neck
Embout de remplissage

(30) Priorität: 31.03.2000 AT 2462000 U
(43) Veröffentlichungstag der Anmeldung: 04.10.2001
(73) Patentinhaber: Tesma Motoren- und Getriebetechnik Ges.m.b.H., 8160 Preding-Krottendorf (AT)
(72) Erfinder: Palvölgyi, Sandor, 8200 Gleisdorf (AT); Pozgainer, Günther, Dr., 8010 Graz (AT); Lackner, Gerald, 8020 Graz (AT); Maier, Bernhard, 8344 Bad Gleichenberg (AT)
(74) Vertreter: Kovac, Werner

(56) Entgegenhaltungen:
- WO-A-97/18966
- WO-A-99/03697

## Beschreibung

Die Erfindung betrifft einen Einfüllstutzen für den Treibstofftank eines Kraftfahrzeuges mit einer im Inneren des Einfüllstutzens gelagerten Verschlussklappe, die durch die Zapfpistole zum Befüllen des Treibstofftanks in ihre offene Lage und über einen Betätigungsmechanismus in ihre geschlossene Lage bringbar ist.

Ein derartiger Einfüllstutzen ist beispielsweise aus der WO 99/03697 bekannt. Bei diesem Einfüllstutzen ist demnach eine innen gelagerte Verschlussklappe vorgesehen, die die allgemein üblichen von außen entweder aufschraubbaren oder über einen Bajonettverschluss aufbringbaren Tankverschlüsse ersetzt. Die Verschlussklappe soll in ihrer geschlossenen Lage eine gas- und flüssigkeitsdichte Abdichtung zwischen dem Treibstofftank auf der einen Seite und der Umgebungsluft auf der anderen Seite sicherstellen. Der Betätigungsmechanismus arbeitet derart, dass, sobald die Zapfpistole aus dem Einfüllstutzen herausgezogen worden ist, die Verschlussklappe unverzüglich geschlossen wird. Es hat sich nun herausgestellt, dass die allenfalls noch aus der Zapfpistole ablaufenden Treibstofftröpfchen nicht mehr in den Treibstofftank ablaufen können. Diese Treibstofftröpfchen verbleiben auf der geschlossenen Klappe bzw. im Bereich außerhalb derselben und verdunsten unerwünschterweise in die Umgebungsluft.

Ein Einfüllstutzen mit den Merkmalen des Oberbegriffs des 1. Anspruchs ist bekannt aus WO-A-9718966.

Der Erfindung liegt daher die Aufgabe zu Grunde, bei einem Einfüllstutzen der eingangs genannten Art auf einfache Weise sicherzustellen, dass die nachträglich noch ablaufenden Treibstofftröpfchen nicht mehr in die Umgebungsluft verdunsten.

Gelöst wird die gestellte Aufgabe erfindungsgemäß dadurch, dass der Betätigungsmechanismus der Verschlussklappe während der Schließbewegung mit einer Dämpfungseinrichtung derart zusammenwirkt, dass die Verschlussklappe ungedämpft öffnet und zeitverzögert schließt.

Damit ist auf einfache Weise sichergestellt, dass nachträglich ablaufende Tröpfchen Zeit genug haben, in Richtung Treibstofftank abzulaufen.

Von besonderem Vorteil ist es, wenn die Dämpfungseinrichtung bei geschlossener Verschlussklappe vom Betätigungsmechanismus entkoppelt ist. Damit ist gewährleistet, dass eine etwaige Funktion der federbelasteten Verschlussklappe als Unterdruckventil durch die Dämpfungseinrichtung nicht beeinträchtigt und nicht beeinflusst werden kann.

Bevorzugt ist eine Ausführungsform der Erfindung, bei der die Verschlussklappe von der Dämpfungseinrichtung zumindest weitgehend unbeeinflusst in ihre offene Stellung bringbar ist. Das Öffnen der Verschlussklappe beim Einführen der Zapfpistole erfordert daher kein Überwinden zusätzlicher Kräfte. Es ist somit auch gewährleistet, dass die Dämpfungseinrichtung beim Öffnen der Klappe nicht mitbetätigt werden muss, was beispielsweise bei tieferen Außentemperaturen von Vorteil ist, wo Mehrbelastungen des Betätigungsmechanismus zu Beschädigungen desselben führen könnten.

Wird nun der Betätigungsmechanismus der Verschlussklappe so ausgeführt, dass dieser einen die Verschlussklappe beaufschlagenden Betätigungshebel aufweist, welcher über eine Verzahnung mit einer Verzahnung einer federbelasteten Zahnstange zusammenwirkt, kann auf einfache Weise für ein Zusammenwirken mit einer Dämpfungseinrichtung vorgesehen sein, dass die Zahnstange eine zweite Verzahnung aufweist, die während der Öffnungsbewegung der Verschlussklappe mit einem Zahnrad oder dergleichen, welches mit der Dämpfungseinrichtung in Wirkverbindung steht, in Eingriff bringbar ist.

Bei dieser Ausführungsform kann auf sehr einfache Weise die erwünschte Entkopplung der Dämpfungseinrichtung vom Betätigungsmechanismus der Verschlussklappe in deren geschlossener Stellung folgen, indem das Zahnrad während der Schließbewegung der Verschlussklappe von der Verzahnung der Zahnstange wieder außer Eingriff kommt.

Gerade bei dieser Ausführungsform ist es besonders vorteilhaft, wenn die Dämpfungseinrichtung ein Rotationsdämpfer ist, der während der Öffnungsbewegung der Verschlussklappe in seiner ungedämpften Drehrichtung betätigbar ist. Ein Rotationsdämpfer ist besonders gut geeignet, mit der bereits vorhandenen Zahnstange zusammenzuwirken und beansprucht wenig Platz.

Bei der gegenständlichen Erfindung können jedoch vorteilhafterweise auch andere Typen von Dämpfungseinrichtungen, wie beispielsweise ein Lineardämpfer, verwendet werden. Von der Art der Dämpfungswirkung bzw. des Dämpfungsmechanismus kommen Silikonöldämpfer, Luft- oder Reibungsdämpfer oder dergleichen in Betracht.

Weitere Merkmale, Vorteile und Einzelheiten der Erfindung werden nun anhand der Zeichnung, die schematische Darstellungen eines Ausführungsbeispieles enthält, näher beschrieben. Dabei zeigen
Fig.1 einen Längsschnitt durch einen äußeren Teilbereich eines Einfüllstutzens mit geschlossener Verschlussklappe und
Fig. 2 einen Längsschnitt durch den äußeren Teilbereich des Einfüllstutzens mit geöffneter Verschlussklappe.

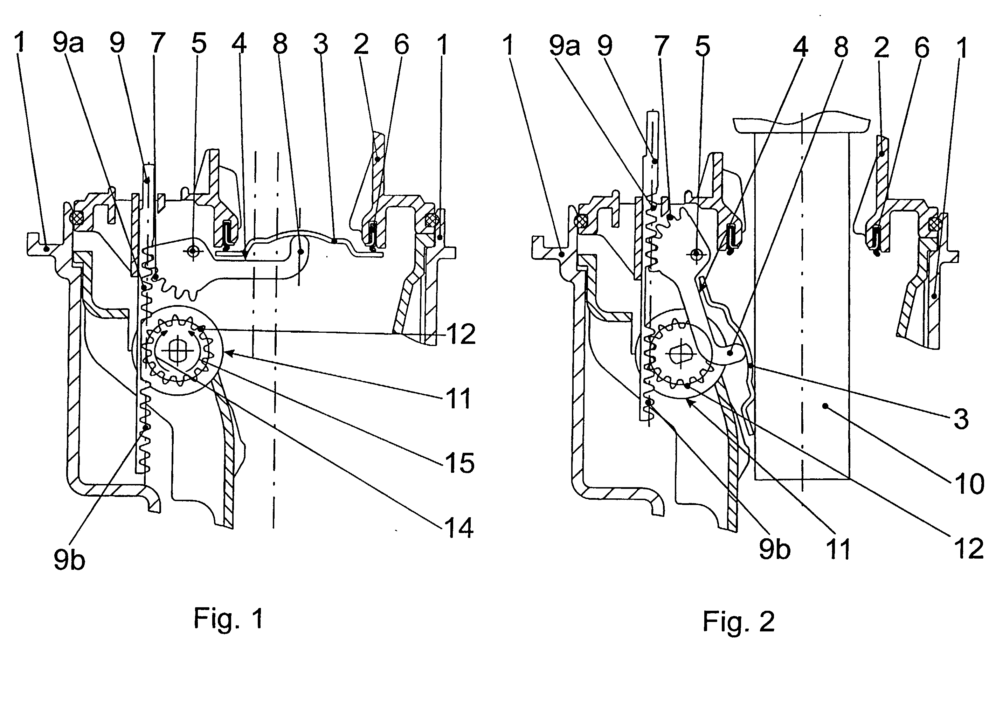

In den beiden Zeichnungsfiguren sind vom Einfüllstutzen nur jene Teile dargestellt, die für die Funktion und das Verständnis der gegenständlichen Erfindung von Bedeutung sind. Es wird darauf verwiesen, dass die weiteren, nicht dargestellten Bauteile insbesondere gemäß der in den Fig. 1 bis Fig. 6 der WO 99/03697 dargestellten Ausführungsform eines Einfüllstutzens ausgeführt sein können. In der nachfolgenden Beschreibung wird übrigens an einigen Stellen auf die WO 99/03697 verwiesen.

Der in Fig. 1 und 2 dargestellte Einfüllstutzen ist mit einem hier nur zum Teil gezeigten äußeren Gehäuse 1 versehen, an welchem, den Einfüllstutzen von außen abdeckend, eine hier nicht dargestellte äußere Klappe gelagert sein kann. Die Ausgestaltung und Anordnung der äußeren Klappe kann analog zu jener gemäß Fig. 3 und 4 der WO 99/03697 erfolgen. Beim Betanken wird diese Klappe geöffnet und nach dem Tanken wieder geschlossen.

Den eigentlichen Verschluss des Einfüllstutzens bildet eine im Inneren desselben angeordnete und gelagerte Verschlussklappe 3, die die Öffnung am Endbereich eines inneren, insbesondere rohrförmigen, Gehäuseteils 2 verschließt. Beim Tanken wird die Verschlussklappe 3 durch die Zapfpistole 10 weggedrückt und die Öffnung wird freigegeben. Die Verschlussklappe 3 ist in der in Fig. 1 dargestellten geschlossenen Lage von einem Betätigungshebel 4, insbesondere mittig, beaufschlagt und wird gegen eine am Randbereich des Gehäuseteils 2 in einer umlaufenden Nut eingesetzte Dichtung 6 gedrückt. Der Betätigungshebel 4 ist in hier nicht dargestellter Weise an einer gehäusefesten Achse 5 drehbar gelagert. An dieser Achse 5 ist auch die Verschlussklappe 3 in ebenfalls nicht dargestellter Weise schwenkbar angeordnet. Der Betätigungshebel 4 weist auf der einen Seite der Achse 5 einen L-förmig gestalteten Arm 8 auf, mit welchem die Verschlussklappe 3 von unten beaufschlagt wird. An der anderen Seite der Achse 5 besitzt der Betätigungshebel 4 eine gebogen verlaufende Verzahnung 7, die zum Teil mit einer Verzahnung 9a einer Zahnstange 9 in Eingriff steht. Die beiden Verzahnungen 7, 9a wirken in der weiter unten beschriebenen Weise zusammen.

Die Zahnstange 9 ist gegenüber gehäusefesten Teilen verschiebbar gelagert und ist an ihrem in den Zeichnungsfiguren oberen Ende auf nicht dargestellte Weise federbeaufschlagt, sodass über die miteinander in Eingriff stehenden Verzahnungen 7, 9a der Betätigungshebel 4 die Verschlussklappe 3 in ihre geschlossene Stellung drückt. Die Federbeaufschlagung der Zahnstange 9 kann über ein Feder-Kolbensystem, wie es beispielsweise in Fig. 2 der WO 99/03697 dargestellt ist, erfolgen.

Die Zahnstange 9 wirkt ferner mit einer Dämpfungseinrichtung 11 zusammen. Bei der dargestellten Ausführungsform ist diese Dämpfungseinrichtung 11 ein Rotationsdämpfer, welcher ein außen liegendes Zahnrad 12 aufweist, dessen Zähne mit einer zweiten Verzahnung 9b der Zahnstange 9 in Eingriff bringbar sind. Bei der dargestellten Ausführungsform ist die Dämpfungseinrichtung 11 unterhalb des Betätigungshebels 4 an einem gehäusefesten Teil des Einfüllstutzens angeordnet bzw. befestigt. Die beiden Verzahnungen 9a, 9b der Zahnstange 9 sind voneinander durch einen verzahnungsfreien Abschnitt der Zahnstange 9 getrennt. Hier befindet sich in der in Fig. 1 gezeigten Ausgangslage das Zahnrad 12 der Dämpfungseinrichtung 11.

Der über das Zahnrad 12 betätigbare Rotationsdämpfer 11 kann eine Wirkungsweise aufweisen, bei der nur in einer der beiden Drehrichtungen eine Dämpfung erfolgt. Der Pfeil 14 in Fig. 1 zeigt die ungedämpfte Drehrichtung, der Pfeil 15 die gedämpfte Drehrichtung. Es ist jedoch auch möglich, einen Rotationsdämpfer ohne Freilauf zu verwenden, bei dem demnach in beiden Drehrichtungen eine Dämpfung erfolgt.

Wird nun zum Betanken des Fahrzeuges die Verschlussklappe 3 durch Einführen der Zapfpistole 10 geöffnet, wird über die Verschlussklappe 3 der Betätigungshebel 4 im Uhrzeigersinn verschwenkt, wodurch die Zahnstange 9 gegen die Kraft der nicht dargestellten Federn über die miteinander in Eingriff stehenden Verzahnungen 9a, 7 nach oben verschoben wird. Dabei kommt die zweite Verzahnung 9b der Zahnstange 9 in Eingriff mit Zähnen des Zahnrades 12, welches die Dämpfungseinrichtung 11 in ihrer ungedämpften Drehrichtung betätigt.

Nach dem Betanken wird die Zapfpistole 10 entfernt und die federbeaufschlagte Zahnstange 9 verschiebt sich wieder nach unten. Damit wird die Schließbewegung der Verschlussklappe 3 in die Wege geleitet, die jedoch durch die Dämpfungseinrichtung 11, die jetzt in ihrer gedämpften Drehrichtung betätigt wird, zeitverzögert erfolgt. Damit ist sichergestellt, dass allenfalls noch vorhandene Treibstofftröpfchen in das Tankinnere abfließen können. In der geschlossenen Lage der Verschlussklappe 3 ist die Dämpfungseinrichtung 11 vom Betätigungsmechanismus der Verschlussklappe 3 wieder abgekoppelt, wodurch verhindert ist, dass ein Restmoment oder eine Restkraft auf die Verschlussklappe 3 wirken kann.

Die Erfindung ist auf die dargestellte und beschriebene Ausführungsform nicht eingeschränkt. So kann beispielsweise die Verschlussklappe anders ausgeführt und gelagert sein und es kann die Mechanik zum Betätigen der Verschlussklappe auf andere Weise ausgestaltet sein. Was die Dämpfungseinrichtung betrifft, so kann diese sowohl an anderer Stelle als dargestellt untergebracht sein und/oder es kann ein anderer Dämpfertyp, beispielsweise ein Lineardämpfer, verwendet werden. Was das Dämpfungsmedium bzw. die Art der Dämpfung betrifft, kommen Silikonöldämpfer, Luft- oder Reibungsdämpfer oder dergleichen in Frage.

## Patentansprüche

1. Einfüllstutzen für den Treibstofftank eines Kraftfahrzeuges mit einer im Inneren des Einfüllstutzens gelagerten Verschlussklappe, die durch die Zapfpistole zum Befüllen des Treibstofftanks in ihre offene Lage und über einen Betätigungsmechanismus in ihre geschlossene Lage bringbar ist,
**dadurch gekennzeichnet,**
**dass** der Betätigungsmechanismus der Verschlussklappe (3) während der Schließbewegung mit einer Dämpfungseinrichtung (11) derart zusammenwirkt, dass die Verschlussklappe (3) ungedämpft öffnet und zeitverzögert schließt.

2. Einfüllstutzen nach Anspruch 1, **dadurch gekennzeichnet, dass** die Dämpfungseinrichtung (11) bei geschlossener Verschlussklappe (3) vom Betätigungsmechanismus entkoppelt ist.

3. Einfüllstutzen nach Anspruch 1 oder 2, bei dem der Betätigungsmechanismus der Verschlussklappe einen diese beaufschlagenden Betätigungshebel aufweist, welcher über eine Verzahnung mit einer Verzahnung einer federbelasteten Zahnstange zusammenwirkt, **dadurch gekennzeichnet, dass** die Zahnstange (9) eine zweite Verzahnung (9b) aufweist, die während der Öffnungsbewegung der Verschlussklappe (3) mit einem mit der Dämpfungseinrichtung (11) zusammenwirkenden Zahnrad (12) in Eingriff bringbar ist.

4. Einfüllstutzen nach Anspruch 3, **dadurch gekennzeichnet, dass** das Zahnrad (12) während der Schließbewegung der Verschlussklappe (3) von der Verzahnung (9b) der Zahnstange (9) außer Eingriff bringbar ist.

5. Einfüllstutzen nach einem der Ansprüche 1 bis 4, **dadurch gekennzeichnet, dass** die Dämfpungseinrichtung (11) ein Rotationsdämpfer ist, der während der Öffnungsbewegung der Verschlussklappe (3) in einer ungedämpften Drehrichtung betätigbar ist.

6. Einfüllstutzen nach einem der Ansprüche 1 bis 5, **dadurch gekennzeichnet, dass** die Dämpfungseinrichtung ein Lineardämpfer ist.

7. Einfüllstutzen nach einem der Ansprüche 1 bis 6, **dadurch gekennzeichnet, dass** die Dämpfungseinrichtung ein Silikonöldämpfer, ein Luft- oder Reibungsdämpfer oder dergleichen ist.

## Claims

1. A filler neck for the fuel tank of a motor vehicle, with a shutter which is mounted inside the filler neck and can be brought by the pump nozzle into its open position for filling the fuel tank and into its closed position via an actuating mechanism, **characterized in that** the actuating mechanism of the shutter (3) cooperates with a damping device (11) during the closing movement, in such a way that the shutter (3) opens without damping and closes with a time delay.

2. The filler neck as claimed in claim 1, **characterized in that** the damping device (11) is uncoupled from the actuating mechanism when the shutter (3) is closed.

3. The filler neck as claimed in one of claims 1 or 2, in which the actuating mechanism of the shutter has an actuating lever which acts upon the latter and which cooperates via a toothing with a toothing of a spring-loaded rack, **characterized in that** the rack (9) has a second toothing (9b) which, during the opening movement of the shutter (3), can be brought into engagement with a gearwheel (12) cooperating with the damping device (11).

4. The filler neck as claimed in claim 3, wherein, during the closing movement of the shutter (3), the gearwheel (12) can be brought out of engagement with the toothing (9b) of the rack (9).

5. The filler neck as claimed in one of claims 1 to 4, **characterized in that** the damping device (11) is a rotary damper which can be actuated in an undamped direction of rotation during the opening movement of the shutter (3).

6. The filler neck as claimed in one of claims 1 to 5, **characterized in that** the damping device is a linear damper.

7. The filler neck as claimed in one of claims 1 to 6, **characterized in that** the damping device is a silicone-oil damper, an air damper or friction damper or the like.

## Revendications

1. Tubulure de remplissage d'un réservoir de carburant de véhicule automobile, avec un volet de fermeture qui est monté à l'intérieur de la tubulure de remplissage, et qui peut être amené dans sa position ouverte par le pistolet distributeur pou remplir le réservoir de carburant et dans sa position fermée par un mécanisme d'actionnement,
**caractérisée en ce que** le mécanisme d'actionnement du volet de fermeture (3) coopère pendant le mouvement de fermeture avec un dispositif d'amortissement (11), de façon que le volet de fermeture (3) s'ouvre sans être amorti et se ferme avec un certain retard.

2. Tubulure de remplissage selon la revendication 1, **caractérisée en ce que** le dispositif d'amortissement (11) est découplé du mécanisme d'actionnement lorsque le volet de fermeture (3) est fermé.

3. Tubulure de remplissage selon la revendication 1 ou 2, dans laquelle le mécanisme d'actionnement du volet de fermeture comporte un levier d'actionnement qui sollicite ledit volet de fermeture, et qui coopère via une denture avec une denture d'une crémaillère contrainte par ressort, **caractérisée en ce que** la crémaillère (9) comporte une deuxième denture (9b) qui peut être amenée en prise avec une roue dentée (12) coopérant avec le dispositif d'amortissement (11) pendant le mouvement d'ouverture du volet de fermeture (3).

4. Tubulure de remplissage selon la revendication 3, **caractérisée en ce que** la roue dentée (12) peut être amenée hors de prise d'avec la denture (9b) de la crémaillère (9) pendant le mouvement de fermeture du volet de fermeture (3).

5. Tubulure de remplissage selon l'une des revendications 1 à 4, **caractérisée en ce que** le dispositif d'amortissement (11) est un amortisseur rotatif qui peut être actionné dans un sens de rotation non amorti pendant le mouvement d'ouverture du volet de fermeture (3).

6. Tubulure de remplissage selon l'une des revendications 1 à 5, **caractérisée en ce que** le dispositif d'amortissement est un amortisseur linéaire.

7. Tubulure de remplissage selon l'une des revendications 1 à 6, **caractérisée en ce que** le dispositif d'amortissement est un amortisseur à huile de silicone, un amortisseur à air, ou bien un amortisseur à friction ou analogue.
